Europäisches Patentamt

European Patent Office

Office européen des brevets

(19)

(11) Veröffentlichungsnummer : **0 080 556**
**B1**

(12) EUROPÄISCHE PATENTSCHRIFT

(45) Veröffentlichungstag der Patentschrift :
22.10.86

(51) Int. Cl.⁴ : **F 16 B   2/04**

(21) Anmeldenummer : 82106898.8

(22) Anmeldetag : 30.07.82

(54) Einschiebbares Klemmschloss zur lösbaren Verbindung von zwei Bauelementen.

(30) Priorität : 26.11.81 DEU 8134536

(43) Veröffentlichungstag der Anmeldung :
08.06.83 Patentblatt 83/23

(45) Bekanntmachung des Hinweises auf die Patenterteilung : 22.10.86 Patentblatt 86/43

(84) Benannte Vertragsstaaten :
AT BE CH DE FR GB IT LI NL SE

(56) Entgegenhaltungen :
AU-B-   514 900
CH-A-   591 022
DE-A- 2 906 281
DE-C-   569 082
DE-U- 7 036 749
DE-U- 7 517 522
FR-A- 2 000 838
FR-A- 2 129 259
GB-A- 1 477 884

(73) Patentinhaber : Hestex Systems b.v.
Lage Brink 80
NL-7317 BD Apeldoorn (NL)

(72) Erfinder : Sterl, Rudolf
Bierweg 56
D-8501 Wendelstein 5 (DE)

(74) Vertreter : Lorenzen, Knud, Dipl.-Chem. Dr.
Morassistrasse 8
D-8000 München 5 (DE)

## Beschreibung

Die Erfindung betrifft ein einschiebbares Klemmschloß zur lösbaren Verbindung von zwei Bauelementen, insbesondere von einem mit hinterschnittener Nut versehenen Profilelement und einem Hohlprofilträgerelement, bestehend aus zwei schwenkbar miteinander verbundenen Klemmbacken, die mittels einer hieran angreifenden Stellschraube in die Klemmstellung gespreizt werden können und jeweils hakenförmig nach außen gebogene Klemmköpfe aufweisen, welche in T-förmig hinterschnittene Öffnungen des ersten Bauelementes in Eingriff gebracht werden können, und wobei eine erste der Klemmbacken mit einer sich federnd gegen die zweite Klemmbacke abstützenden Führungsbuchse versehen ist, die in einem Ausschnitt der ersten Klemmbacke geführt und gehalten ist und die in der Einraststellung in eine passende Bohrung in dem zweiten Bauelement hineinragt.

Es sind bereits mehrere Klemmschlösser bzw. Verbindungselemente zur lösbaren Verbindung von zwei Bauelementen, z. B. waagerechten Träger- oder Wandelementen und senkrechten Profilelementen bekannt. Beispielsweise ist in der norwegischen Patentschrift 96 260 ein splintförmiges Anschlußelement beschrieben, dessen vorderes Ende geschlitzt ist, wobei in eines dieser Schlitzteile eine Stellschraube eingesetzt ist, welche sich gegen den zweiten schlitzförmigen Teil abstützt und damit das vordere, geschlitzte Ende dieses splintförmigen Verbindungselementes auseinanderspreizt, so daß seine Hakenköpfe mit den entsprechenden Ausnehmungen des senkrechten Elementes in Eingriff kommen. Aus der DE-AS 1 054 320 ist eine Tragkonsole bekannt, die in einer Halteschiene eingesetzt werden kann und bei der ebenfalls die beiden vorderen mit Hakenköpfen versehenen Enden mittels einer Stellschraube auseinandergespreizt und damit mit den entsprechenden Unterschneidungen der Halteschiene eingesetzt werden können. Aus der DE-AS 1 302 838 ist ein Gestell aus Gestellbauteilen bekannt, bei welchem in ein Profilelement ein Gestellbauteil mittels zweier flacher Anschlußarme mit hakenförmig nach außen gebogenen freien Enden eingesetzt werden können, wobei diese Anschlußarme durch Federbelastung nach außen gedrückt und mittels eines Exzenters festgeklemmt werden kann. Weiterhin ist aus dem DE-GM 7 501 856 ein Spannschloß zum Zusammenfügen von Profilstangen bekannt, bei welchem das Spannschloß aus zwei über ein Scharnier zusammengefügten mit hakenförmig nach außen gebogenen Klemmköpfen versehenen Klemmbacken besteht und durch einen Exzenter in die Klemmstellung gespreizt werden kann. Bei diesem Spannschloß ist ein Federbügel vorgesehen, der das Spannschloß in der Nicht-Klemmstellung zusammendrückt. Bei diesem vorbekannten Spannschloß sind die beiden Klemmbacken jedoch über ein Scharnier an ihrem hinteren Ende fest miteinander verbunden. Weiterhin ist aus der DE-OS 2 906 281 ein Kupplungselement für Träger mit längslaufender T-förmig hinterschnittener Nut bekannt, bei welchem frei schwenkbare Hebel bzw. Klemmbacken am hinteren Ende ebenfalls über ein Scharnier verbunden sind, diese Hebel durch eine Druckfeder immer in die gespreizte Stellung gepreßt werden und das Stellmittel bzw. die Stellschraube, welche in dem einen Hebel bzw. einer klemmbacke vorgesehen ist, über eine Druckfeder auf den zweiten Hebel bzw. die zweite Klemmbacke einwirkt. Bei einer Ausführung dieses vorbekannten Kupplungselementes ist ebenfalls eine Führungsbuchse vorgesehen, auf welche die Feder einwirkt, so daß diese Führungsbuchse immer nach außen gepreßt wird und in eine entsprechende Bohrung oder Öffnung des Hohlprofilträgers, in welche das Kupplungselement eingesetzt wird, einrastet. Als durch dieses vorbekannte Kupplungselement gelöste Aufgabe wird angegeben, daß bereits vor der Betätigung des Stellmittels ein Reibschluß zwischen den Hakenköpfen des Kupplungselementes und den Rändern der Nut des Profilelementes erzielbar ist, wodurch beim Aufbau des Kupplungselementes und dessen Handhabung Vereinfachungen erzielt werden.

Aufgabe der vorliegenden Erfindung ist die Bereitstellung eines leicht zu bedienenden, einschiebbaren Klemmschlosses der im Oberbegriff des Patentanspruches 1 beschriebenen Art, bei welchem das Klemmschloß nicht nur einfach in das Trägerelement einschiebbar ist sondern nach dem Festklemmen auch eine spielfreie Verbindung zwischen Klemmschloß und Trägermaterial ermöglicht.

Zur Aufgabe dieser Lösung dient das einschiebbare Klemmschloß der zuvor beschriebenen Art, das dadurch gekennzeichnet ist, daß

a) die beiden Klemmbacken an ihrem den hakenförmigen Klemmköpfen gegenüberliegenden Ende Halteköpfe und Schlitze, in denen eine geschlitzte Spannhülse in Eingriff steht, aufweisen,

b) die Führungsbuchse als Gewindeeinsatz ausgebildet ist, in dessen Gewinde eine Stellschraube zum Spreizen und Festklemmen der Klemmbacken und der Klemmköpfe eingesetzt ist,

c) in einem Ausschnitt der zweiten Klemmbacke ein Gegenlagerteil vorgesehen ist, auf welches sich die Stellschraube beim Spreizen und Festklemmen abstützt.

Bei bevorzugten Ausführungsformen des Klemmschlosses verjüngen sich die beiden Klemmbacken keilförmig nach dem mit den Klemmköpfen versehenen Ende.

Bei einer weiteren bevorzugten Ausführungsform mit sich keilförmig verjüngenden Klemmbacken weist die zweite Klemmbacke einen Abstützwinkel auf, der an dem Haltekopf der ersten Klemmbacke anliegt.

Bei einer weiteren bevorzugten Ausführungsform sind in dem Gegenlagerteil, auf welches sich die Stellschraube beim Spreizen und Festklemmen abstützt, zwei Bohrungen vorgesehen, in welchen Druckfedern eingesetzt sind.

Bei einer weiteren bevorzugten Ausführungsform ist das Gegenlagerteil wannenförmig ausgebildet und der dieses Gegenlagerteil aufnehmende Ausschnitt in der zugehörigen, zweiten Klemmbacke ist komplementär zu der Wannenform des Gegenlagerteils ausgebildet.

Bei einer weiteren bevorzugten Ausführungsform sind am Rücksprung der Klemmköpfe der Klemmbacken Begrenzungsnasen vorgesehen.

Vorteilhafterweise bestehen das Gegenlagerteil und/oder der Gewindeeinsatz und/oder die Stellschraube des Klemmschlosses aus gehärtetem, gegebenenfalls verzinktem Stahl, wobei nach der Verzinkung noch gegebenenfalls eine Chromatierungsbehandlung durchgeführt werden kann.

Das bevorzugte Material für die beiden Klemmbacken eines solchen Klemmschlosses ist Zinkdruckguß.

Das einschiebbare Klemmschloß gemäß der vorliegenden Neuerung wird anhand der Zeichnung und bevorzugter Ausführungsformen näher erläutert ; in der Zeichnung sind :

Figur 1 eine Querschnittsansicht von oben des Klemmschlosses in seiner allgemeinen Form ;

Figur 2 ein Klemmschloß im Querschnitt von oben mit keilförmig verjüngten Klemmbacken, in das Gegenlagerteil eingesetzten Druckfedern sowie Abstützwinkel und wannförmigem Gegenlagerteil ;

Figur 3 eine Seitenansicht des vorderen Teils einer Klemmbacke mit Halteköpfen, bei welchem Begrenzungsnasen vorgesehen sind ;

Figur 4 eine schematische Schnittansicht von oben des Klemmschlosses gemäß Fig. 2, eingesetzt in ein Hohlprofilträgerelement und ein Profilelement.

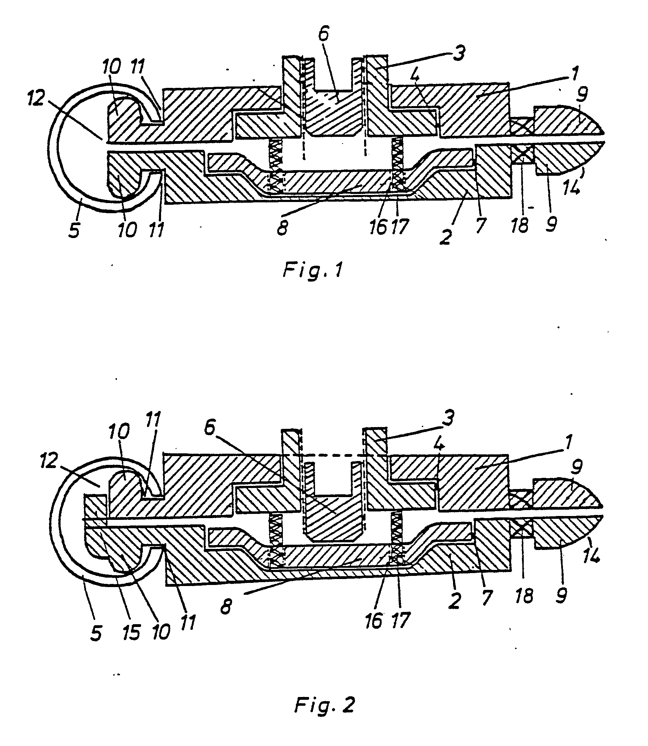

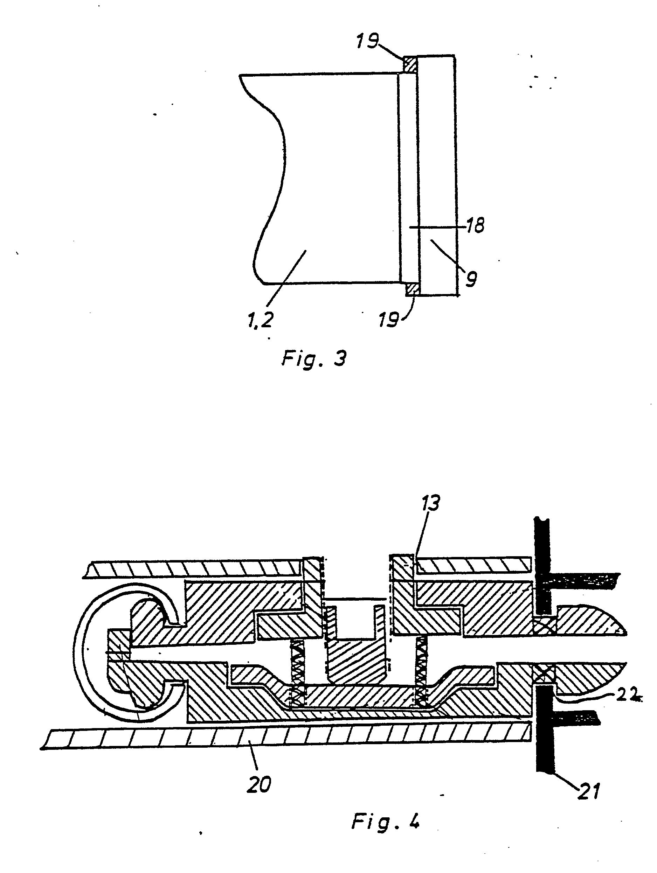

Das in der Fig. 1 im Querschnitt von oben dargestellte Klemmschloß besteht aus den Klemmbacken 1 und 2. Diese beiden Klemmbacken werden durch die aus Federstahl hergestellte Spannhülse 5 gehalten, wobei diese Spannhülse 5 in Schlitze 11 an dem Ende 12 der Klemmbacken eingesetzt ist. An diesem Ende 12 der Klemmbacken 1 und 2 sind weiterhin noch Halteköpfe 10 angebracht, um ein Abgleiten der Spannhülse 5 zu verhindern. Die Spannhülse 5 ermöglicht es, daß beim Spreizen und Festklemmen der Klemmbacken 1 und 2 durch Anpressen an die entsprechenden Innenwände eines Hohlprofilträgers 20 (siehe Fig. 4) ein Auseinanderspreizen der beiden Klemmbacken auch an diesem Ende 12 möglich ist, wodurch erreicht wird, daß die Klemmbacken 1 und 2 auf ihrer gesamten Länge spielfrei an den entsprechenden Innenwänden des Hohlprofilträgers 20 anliegen können. Durch das Zusammenhalten der beiden Klemmbacken 1 und 2 am Ende 12 durch die Spannhülse 5 ist daher nicht nur eine Schwenkbewegung der beiden Klemmbacken beim Auseinanderspreizen und Festklemmen möglich sondern auch eine — wenn auch geringe — Auseinanderbewegung dieser Klemmbacken 1 und 2 am Ende 12, was bei den bisherigen Ausführungsformen, bei denen die beiden Klemmbacken an ihrem einen Ende über ein Scharnier miteinander verbunden sind, nicht möglich war. Weiterhin bewirkt die Spannhülse 5, daß das Klemmschloß im nicht-eingebauten Zustand immer in zusammengepreßter Stellung gehalten wird und sich nicht öffnet, so daß ein Herausfallen von einzelnen Bauelementen des Klemmschlosses bei der Lagerung, beim Versand und vor dem Einbau bzw. nach einem Ausbau sicher vermieden wird.

Weiterhin umfaßt das Klemmschloß einen Gewindeeinsatz 3, der in einem entsprechenden Ausschnitt 4 der Klemmbacke 1 geführt und gehalten wird. Dieser Gewindeeinsatz besitzt ein Innengewinde, in welches eine Stellschraube 6, vorteilhafterweise eine Inbusschraube, eingesetzt ist. Der Gewindeeinsatz hat in seinem hülsenartigen Teil eine ausreichende Wandstärke. Beim Spreizen und Festklemmen des Klemmschlosses wird die Inbusschraube nach innen eingeschraubt und stützt sich auf das Gegenlagerteil 8 ab. Durch die winkelförmige Ausgestaltung des Gewindeeinsatzes nimmt dieser die Klemmbacke 1 mit. Weiterhin weisen die Klemmbacken 1 und 2 noch jeweils Klemmköpfe 9 an ihrem Ende 14 auf, welche hinterschnitten sind, d. h. einen Rücksprung 18 aufweisen, wodurch ein Einrasten in das zweite Bauelement, beispielsweise einen mit hinterschnittener Nut versehenes Profilelement — siehe Fig. 4 — möglich ist.

Bei der Anwendung des Klemmschlosses gemäß der Neuerung wird dieses in an sich bekannter Weise in das erste Bauelement, z. B. ein Hohlprofilträgerelement, eingesetzt, durch die vorgesehenen Druckfedern 17, welche vorteilhafterweise in Bohrungen 16 des Gegenlagerteils 8 eingesetzt sind, wird der Gewindeeinsatz immer nach außen gedrückt. Beim Einsetzen in das Hohlprofilträgerelement wird der Gewindeeinsatz manuell bei noch nicht eingeschraubter Stellschraube 6 in das Klemmteil eingedrückt, so daß ein einwandfreies Einführen in das Hohlprofilträgerelement möglich ist, d. h. die Dicke des Klemmschlosses von der Außenseite der Klemmbacke 2 bis zur Oberseite des Gewindeeinsatzes 6 bei eingedrücktem Zustand darf nicht größer sein als die entsprechende lichte Weite des Hohlprofilträgerelementes. Wenn das Klemmschloß in das Hohlprofilträgerelement entsprechend weit eingeschoben ist, wird der Gewindeeinsatz durch die Druckfederspannung in die entsprechende Bohrung 13 im Hohlprofilträgerelement 20 eingerastet. Diese Bohrung 13 in dem Hohlprofilträger ist so angeordnet, daß von dem vorderen Ende 14 der Klemmbacken 1 und 2 nur der Rücksprung 18 und die Klemmköpfe 9 herausragen, die dann in die entsprechende hinterschnittene Nut des Profilelementes 21 — siehe Fig. 4 — eingesetzt werden können.

Wenn anschließend die Stellschraube 6 in dem Gewindeeinsatz 3 bis auf das Gegenlagerteil heruntergeschraubt wird und dann angezogen wird, spreizen sich die beiden Klemmbacken sowohl am Ende 14 als auch am Ende 12 bis die Kontaktflächen der Klemmbacken 1 und 2 an den entsprechenden Innenwänden des Hohlprofilträgers 20 anliegen und gleichzeitig eine kraftschlüssige Verbindung mit dem Profilelement 21 über die Klemmköpfe 9 und die Rücksprünge 18 erfolgt.

In der Fig. 2 ist ein Klemmschloß dargestellt, das die Merkmale von mehreren bevorzugten Ausführungsformen wiedergibt.

Bei dem in der Fig. 2 ebenfalls im Querschnitt mit der Ansicht von oben dargestellten Klemmschloß verjüngen sich die Klemmbacken 1 und 2 keilförmig nach dem mit den Klemmköpfen 9 versehenen Ende 14 hin. Hierdurch wird es einerseits möglich, die Klemmköpfe 9 dicker zu gestalten, da das Klemmschloß beim Festklemmen durch die Verjüngung an dem Ende 14 weiter auseinandergespreizt werden kann als an dem Ende 12. Auch in diesem Fall erfolgt jedoch eine Spreizung am Ende 12, so daß die äußeren Seiten der Klemmbacken 1 und 2 auf ihrer gesamten Länge an den entsprechenden Innenwänden des Hohlprofilträgers 20 anliegen. Wenn bei dieser Ausführungsform an der Klemmbacke 2 am Ende 12 ein Abstützwinkel 15 vorgesehen ist, wird durch die größere Spreizung der beiden Klemmbacken am Ende 14 beim Festklemmen, d. h. dem insgesamt größeren Spreizwinkel, durch diesen Abstützwinkel 15 eine Verschiebungskraft zwischen den beiden Klemmbacken 1 und 2 wirksam, wodurch die Klemmbacke 2 zurückgezogen wird, so daß der Klemmkopf 9 dieser Klemmbacke noch einen stärkeren Zug auf das Profilelement 21 ausübt und insgesamt eine noch kraftschlüssigere und mit weniger Spiel versehene Verbindung nach Einbau des Klemmschlosses zur Verbindung von zwei Bauelementen bewirkt wird.

Wie ebenfalls in den Fig. 1 und Fig. 2 gezeigt, werden die Druckfedern vorteilhafterweise in Bohrungen 16 in dem Gegenlagerteil 8 eingesetzt, so daß der Zusammenbau des Klemmschlosses in einfacher Weise möglich ist. Statt der in den Fig. 1 und Fig. 2 dargestellten, zwei Druckfedern ist es selbstverständlich auch möglich, eine entsprechend dimensionierte Spiralfeder zum Auseinanderdrücken von Gegenlagerteil 8 und Gewindeeinsatz 3 einzusetzen. In diesem Zusammenhang ist jedoch darauf hinzuweisen, daß durch diese Druckfedern nur der Einbau des Klemmschlosses in einen Hohlprofilträger 20 und das Einrasten des Gewindeeinsatzes 3 in die entsprechende Bohrung 13 dieses Hohlprofilträgers 20 erleichtert wird, über diese Federn erfolgt jedoch keine Kraftübertragung beim Spreizen und Festklemmen des Klemmschlosses.

Wie in den Fig. 1 und 2 dargestellt, ist das Gegenlagerteil 8 wannenförmig ausgebildet und paßt in einen entsprechenden Ausschnitt 7 der Klemmbacke 2. Durch diese wannenförmige Ausbildung des Gegenlagerteils 8 wird eine Versteifung dieses Gegenlagerteils bewirkt. Selbstverständlich ist es jedoch auch möglich, als Gegenlagerteil eine einfache flache Platte zu verwenden.

Bei einer weiteren bevorzugten Ausführungsform, welche in der Fig. 3 dargestellt ist, befinden sich an den Vorsprüngen 18 der Klemmbacken 1 und 2 Begrenzungsnasen 19. Diese Begrenzungsnasen bewirken, daß das Klemmschloß nicht bis zum Anschlag der Klemmköpfe 9 an das Ende eines Hohlprofilträgers 20 eingesetzt werden kann, sondern daß diese Rücksprünge 18 immer aus dem Hohlprofilträger 20 zumindest teilweise herausragen, so daß ein zu weites Einschieben des Klemmschlosses in einen solchen Hohlprofilträger vermieden und der Einbau von in bereits in ein Hohlprofilträger eingesetztem Klemmschloß in ein Profilelement erleichtert wird. Falls außerdem die Bohrung 13 in dem Hohlprofilträger 20 zu weit vom Rande entfernt angefertigt wurde, ist ein Einsetzen, d. h. Einrasten des Gewindeeinsatzes 3 in die Bohrung 13 nicht mehr möglich, da die Begrenzungsnasen 19 ein zu weites Einschieben des Klemmschlosses in den Hohlprofilträger 20 sicher verhindern.

Ein großer Vorteil des Klemmschlosses der vorliegenden Neuerung liegt darin, daß durch seinen Aufbau die beiden Klemmbacken 1 und 2, welche ja relativ komplexe Formen aufweisen, in einfacher Weise aus Zinkdruckguß oder Leichtmetalldruckguß hergestellt werden können. Dies ist insbesondere möglich, da diese Klemmbacken 1 und 2 keinerlei Gewinde, wie bei Ausführungsformen des Standes der Technik, aufweisen, die in Zinkdruckgußmaterial einem erhöhten Verschleiß unterliegen könnten. Die Gewinde befinden sich nur an der Stellschraube 6 bzw. dem Gewindeeinsatz 3, diese werden vorteilhafterweise aus Stahl, bevorzugt aus gehärtetem Stahl, gefertigt, ebenso das Gegenlagerteil 6, so daß eine Verformung bzw. ein vorzeitiger Verschleiß dieser Teile vermieden wird. Um die Korrosionsgefahr herunterzusetzen, können diese Teile noch verzinkt und gegebenenfalls chromatiert werden.

Die Gegenplatte ist bei Ausführung der Klemmbacken in Zinkdruckguß erforderlich, damit die Stellschraube bei dem Abstützen auf der Klemmbacke 2 diese nicht vorzeitig verschleißt bzw. der Druck auf eine größere Fläche verteilt wird. Weiterhin wird ein Durchbiegen einer Zinkdruckgußklemmbacke vermieden.

In der Fig. 4 ist schematisch ein Zusammenbau von zwei Bauelementen mittels des Klemmschlosses gezeigt.

## Patentansprüche

1. Einschiebbares Klemmschloß zur lösbaren Verbindung von zwei Bauelementen (20, 21), insbesondere von einem mit hinterschnittener Nut versehenen Profilelement (21) und einem Hohlprofilträgerelement (20), bestehend aus zwei schwenkbar miteinander verbundenen Klemmbacken (1, 2), die mittels einer hieran angreifenden Stellschraube (6) in die Klemmstellung gespreizt werden können und jeweils hakenförmig nach außen gebogene Klemmköpfe (9) aufweisen, welche in T-förmig hinterschnittenen Öffnungen (22) des ersten Bauelementes (21) in Eingriff gebracht werden können, und wobei eine erste (1) der Klemmbacken mit einer sich federnd gegen die zweite Klemmbacke (2) abstützenden Führungsbuchse (3) versehen ist, die in einem Ausschnitt (4) der ersten Klemmbacke (1) geführt und gehalten ist und die in der Einraststellung in eine passende Bohrung (13) in dem zweiten Bauelement (20) hineinragt, dadurch gekennzeichnet, daß

a) die beiden Klemmbacken (1, 2) an ihrem den hakenförmigen Klemmköpfen (9) gegenüberliegenden Ende (12) Halteköpfe (10) und Schlitze (11), in denen eine geschlitzte Spannhülse (5) in Eingriff steht, aufweisen,

b) die Führungsbuchse (3) als Gewindeeinsatz ausgebildet ist, in dessen Gewinde eine Stellschraube (6) zum Spreizen und Festklemmen der Klemmbacken (1, 2) und der Klemmköpfe (9) eingesetzt ist,

c) in einem Ausschnitt (7) der zweiten Klemmbacke (2) ein Gegenlagerteil (8) vorgesehen ist, auf welches sich die Stellschraube (6) beim Spreizen und Festklemmen abstützt.

2. Klemmschloß nach Anspruch 1, dadurch gekennzeichnet, daß die beiden Klemmbacken (1, 2) sich keilförmig nach dem mit den Klemmköpfen (9) versehenen Ende (14) verjüngen.

3. Klemmschloß nach Anspruch 2, dadurch gekennzeichnet, daß die zweite Klemmbacke (2) einen Abstützwinkel (15) aufweist, der an dem Haltekopf (10) der ersten Klemmbacke (1) anliegt.

4. Klemmschloß nach einem der vorhergehenden Ansprüche, dadurch gekennzeichnet, daß in dem Gegenlagerteil (8) zwei Bohrungen (16) vorgesehen sind, in welchen Druckfedern (17) eingesetzt sind.

5. Klemmschloß nach einem der vorhergehenden Ansprüche, dadurch gekennzeichnet, daß das Gegenlagerteil (8) wannenförmig und der Ausschnitt (7) in der zweiten Klemmbacke (2) komplementär hierzu ausgebildet sind.

6. Klemmschloß nach einem der vorhergehenden Ansprüche, dadurch gekennzeichnet, daß an dem Rücksprung (18) der Klemmköpfe (9) Begrenzungsnasen (19) vorgesehen sind.

7. Klemmschloß nach einem der vorhergehenden Ansprüche, dadurch gekennzeichnet, daß das Gegenlagerteil (8) und/oder der Gewindeeinsatz (3) und/oder die Stellschraube (6) aus gehärtetem, gegebenenfalls verzinkten Stahl bestehen.

8. Klemmschloß nach einem der vorhergehenden Ansprüche, dadurch gekennzeichnet, daß die beiden Klemmbacken (1, 2) aus Zinkdruckguß bestehen.

**Claims**

1. Sliding clamping lock for the detachable connection of two constructional elements (20, 21), particularly of a profile element (21) provided with an undercut groove and a hollow profile carrier element (20), comprising two pivotally connected clamping jaws (1, 2) which can be forced apart into the clamping position by means of an adjusting screw (6) engaging them an each have outwardly curved, hook-shaped clamping heads (9) which can be brought into engagement in T-shaped, undercut openings (22) in the first constructional element (21), and whereby a first (1) of the clamping jaws is provided with a guide sleeve (3) resiliently supported by the second clamping jaw (2), which sleeve is held and guided in an opening (4) in the first clamping jaw (1) and which in the engaged position extends into an appropriate bore (13) in the second constructional element (20), characterised in that

a) at the end (12) opposite the hook-shaped clamping heads (9) both clamping jaws (1, 2) have holding heads (10) and slots (11) in which a slotted clamping sleeve (5) is in engagement,

b) the guide sleeve (3) is constructed as a threaded insert in whose thread an adjusting screw (6) is set for forcing apart and firmly clamping the clamping jaws (1, 2) and the clamping heads (9),

c) a support member (8) which is engaged by the adjusting screw (6) when forcing apart and clamping is provided in an opening (7) in the second clamping jaw (2).

2. Clamping lock as claimed in claim 1, characterised in that both clamping jaws (1, 2) taper in the manner of a wedge towards the end (14) provided with the clamping heads (9).

3. Clamping lock as claimed in claim 2, characterised in that the second clamping jaw (2) has a support angle (15) which engages the holding head (10) of the first clamping jaw (1).

4. Clamping lock as claimed in one of the preceding claims, characterised in that two bores (16) in which pressure springs (17) are set are provided in the support member (8).

5. Clamping lock as claimed in one of the preceding claims, characterised in that the support member (8) is trough-like and the opening (7) in the second clamping jaw (2) is constructed complementarily thereto.

6. Clamping lock as claimed in one of the preceding claims, characterised in that limiting projections (19) are provided on the rebate (18) of the clamping heads (9).

7. Clamping lock as claimed in one of the preceding claims, characterised in that the support member (8) and/or the threaded insert (3) and/or the adjusting screw (6) comprise hardened, optionally galvanised, steel.

8. Clamping lock as claimed in one of the preceding claims, characterised in that both clamping jaws (1, 2) comprise die cast zinc.

**Revendications**

1. Clé de serrage enfichable pour l'assemblage amovible de deux éléments de construction (20, 21), notamment d'un élément profilé (21) muni d'une rainure à contre-dépouille et d'un élément porteur (20) à profil creux, comprenant deux mâchoires de serrage (1, 2) réunies ensemble de manière pivotante et pouvant être écartées en position de serrage par une vis de réglage (6) agissant sur ces dernières, et qui comportent des têtes de serrage (9) recourbées vers l'extérieur, en forme de crochet, et pouvant être engagées dans des ouvertures (22) à contre-dépouille en forme de T du premier élément de construction (21), une première mâchoire de serrage (1) comportant une douille de guidage (3) en appui élastique contre la deuxième mâchoire de serrage (2) et qui est guidée et logée dans un évidement (4) de la première mâchoire de serrage (1), et qui, en position engagée, fait saillie à l'intérieur d'un alésage ajusté (13) ménagé dans le deuxième élément de construction (20), caractérisée en ce que :

a) les deux mâchoires de serrage (1, 2) comportent, à leur extrémité (12) opposée aux têtes de serrage (9) en forme de crochet, des têtes de retenue (10) et des fentes (11), un manchon de serrage fendu (5) étant engagé dans ces dernières,

b) la douille de guidage (3) est une pièce filetée insérée, une vis de réglage (6) destinée à écarter et à bloquer les mâchoires de serrage (1, 2) et les têtes de serrage (9) étant logée dans le filetage,

c) une contre-butée (8), sur laquelle la vis de réglage (6) vient en appui pour l'écartement et le blocage, est logée dans un évidement (7) ménagé dans la deuxième mâchoire de serrage (2).

2. Clé de serrage selon la revendication 1, caractérisée en ce que les deux mâchoires de serrage (1, 2) s'amincissent en forme de coin après leur extrémité (14) portant les têtes de serrage (9).

3. Clé de serrage selon la revendication 2, caractérisée en ce que la deuxième mâchoire de serrage (2) comporte un angle d'appui (15) qui vient en contact sur la tête de retenue (10) de la première mâchoire de serrage (1).

4. Clé de serrage selon l'une des revendications précédentes, caractérisée en ce que deux alésages (16), recevant des ressorts de compression (17), sont ménagés dans la contre-butée (8).

5. Clé de serrage selon l'une des revendications précédentes, caractérisée en ce que la contre-butée (8) est conçue en forme de cuve et que l'évidement (7) ménagé dans la deuxième mâchoire de serrage (2) est complémentaire à celle-ci.

6. Clé de serrage selon l'une des revendications précédentes, caractérisée en ce que le retrait (18) des têtes de serrage (9) comporte des ergots de limitation (19).

7. Clé de serrage selon l'une des revendications précédentes, caractérisée en ce que la contre-butée (8) et/ou la pièce filetée (3) et/ou la vis de réglage (6) sont en acier trempé, le cas échéant, zingué.

8. Clé de serrage selon l'une des revendications précédentes, caractérisée en ce que les deux mâchoires de serrage (1, 2) sont en zinc coulé sous pression.

0 080 556

Fig. 1

Fig. 2

19

18

9

1,2

19

Fig. 3

13

20

22

21

Fig. 4